# DEMANDE DE BREVET EUROPEEN

(11) **EP 1 166 958 A1**
(43) Date de publication de la demande: **02.01.2002**
(21) Numéro de dépôt: 00870121.1
(22) Date de dépôt: 31.05.2000
(51) Int. Cl.: B23Q 11/00

(54) **Procédé de protection contre la pénétration de copeaux dans une pièce à usiner**

(71) Demandeur: Techspace Aero S.A., 4041 Herstal (BE)
(72) Inventeur: Flore, David, 4631 Evegnee-Tignee (BE); Leulier, Guy, 4020 Liege (BE)
(74) Mandataire: Van Malderen, Joelle

(57) **Abrégé**

La présente invention se rapporte à un procédé de protection d'une pièce à usiner, présentant au moins une cavité interne ouverte, en particulier sous la forme d'un canal ou d'un conduit, munie d'au moins une extrémité donnant sur l'extérieur, contre la pénétration de copeaux ou résidus d'usinage à l'intérieur de ladite cavité ouverte, comprenant les étapes suivantes :
- obturation de toutes les extrémités de ladite cavité ouverte sauf une, dite extrémité d'entrée ;
- introduction d'une matière à fort pouvoir d'expansion à l'intérieur de ladite cavité ouverte par l'intermédiaire de l'extrémité d'entrée et obturation de cette extrémité ;
- chauffage de la pièce de manière à provoquer l'expansion de ladite matière à l'intérieur de ladite cavité ouverte, jusqu'à ce que ladite matière occupe tout le volume de ladite cavité ouverte;
- élimination, après usinage de la pièce, de ladite matière de l'intérieur de ladite cavité ouverte par rinçages successifs dans un solvant adéquat.

La présente invention se rapporte également à une pièce à usiner de géométrie complexe obtenue par ledit procédé.

## Description

### Objet de l'invention

La présente invention se rapporte à un nouveau procédé de protection contre la pénétration de copeaux à l'intérieur des cavités internes ouvertes d'une pièce lors de l'usinage.

On entend par « cavité interne ouverte » une cavité présentant au moins une ouverture qui peut être un conduit ou un canal présentant une ou plusieurs entrées et présentant une ou plusieurs sorties.

### Etat de la technique

Il est connu que la présence de copeaux ou résidus d'usinage à l'intérieur d'une pièce peut avoir une influence critique sur le fonctionnement de la pièce elle-même ou sur le fonctionnement du dispositif dans lequel la pièce est intégrée. Les pièces en question sont par exemple des carters pour pompes, filtres, etc.

Actuellement, les pièces doivent être contrôlées à 100% visuellement par un opérateur à l'aide d'un endoscope. Ce contrôle visuel est délicat dans les canaux présentant une géométrie complexe et requiert une grande dextérité de la part de l'opérateur. De plus, l'extraction d'éventuels copeaux détectés est difficile.

Des techniques de bouchonnage consistant à obturer à l'aide de bouchons, par exemple en élastomère, toutes les ouvertures des cavités internes de la pièce avant son usinage ont été proposées. Néanmoins, ces techniques sont loin d'être satisfaisantes dans la mesure où les bouchons risquent à tout instant d'être arrachés lors de l'usinage.

### Buts de l'invention

L'invention a pour but d'empêcher, en cours d'usinage, la pénétration de copeaux et résidus d'usinage dans les cavités internes de la pièce à usiner.

En particulier, l'invention a pour but de garantir une propreté absolue de la pièce, surtout pour une pièce présentant des canaux qui de par leur géométrie, sont difficiles à inspecter et à nettoyer et de garantir ultérieurement par là même une sécurité maximale d'utilisation du dispositif au sein duquel la pièce est intégrée.

Un but complémentaire de l'invention est de proposer une technique de protection à faible coût, facile à mettre en oeuvre et ne perturbant pas le procédé d'usinage.

Un dernier but de la présente invention vise à proposer une protection qui est dite "non polluante", c'est-à-dire qui ne doit laisser aucune trace de son utilisation sur ladite pièce usinée après nettoyage.

### Principaux éléments caractéristiques de l'invention

La présente invention se rapporte à un procédé de protection d'une pièce à usiner, présentant au moins une cavité interne ouverte, en particulier sous la forme d'un canal ou d'un conduit, munie d'au moins une extrémité donnant sur l'extérieur, contre la pénétration de copeaux ou résidus d'usinage à l'intérieur de ladite cavité, comprenant les étapes suivantes :
- obturation de toutes les extrémités de ladite cavité ouverte sauf une, dite extrémité d'entrée;
- introduction d'une matière à fort pouvoir d'expansion à l'intérieur de ladite cavité ouverte par l'intermédiaire de l'extrémité d'entrée et obturation de cette extrémité;
- chauffage de la pièce de manière à provoquer l'expansion de ladite matière à l'intérieur de ladite cavité ouverte, jusqu'à ce que ladite matière occupe tout le volume de ladite cavité;
- élimination, après usinage de la pièce, de ladite matière de l'intérieur de ladite cavité par rinçages successifs dans un solvant adéquat.

De préférence, ladite matière à fort pouvoir d'expansion est résistante à l'influence de la chaleur, au fluide de coupe et aux efforts de coupe. Un exemple d'une telle matière est le polystyrène. Le polyuréthane pourrait également convenir.

De manière particulièrement avantageuse, cette matière à fort pouvoir d'expansion se présente sous la forme de billes comprenant 90 à 95% de polystyrène avant expansion.

De préférence, on ne remplira ladite cavité de ladite pièce à usiner qu'à concurrence de 70 à 80% en poids de la quantité totale de billes en polystyrène pouvant entrer dans ladite cavité.

Avantageusement, ladite pièce est préalablement refroidie avant l'élimination de ladite matière à fort pouvoir d'expansion dans ladite cavité.

De préférence, un dernier rinçage est effectué au moyen d'une solution propre dudit solvant et une étape de vérification de la présence de traces résiduelles de ladite matière à fort pouvoir d'expansion dans ladite cavité est ensuite effectuée par spectrométrie infrarouge.

De manière avantageuse, on effectue tous les rinçages, c'est-à-dire non seulement le dernier rinçage mais également les rinçages précédents, au moyen d'un solvant propre.

La présente invention se rapporte également à un procédé de protection d'une pièce à usiner de géométrie complexe, présentant au moins une cavité interne ouverte, en particulier sous la forme d'un canal ou d'un conduit, munie d'au moins une extrémité donnant sur l'extérieur, contre la pénétration de copeaux ou résidus d'usinage à l'intérieur de ladite cavité ouverte, caractérisé en ce que le volume de la cavité est totalement rempli par une matière solide.

Enfin, la présente invention se rapporte à une pièce à usiner de géométrie complexe, comprenant au moins une cavité interne ouverte présentant un volume intérieur, en particulier sous la forme d'un canal ou d'un conduit, munie d'au moins une extrémité donnant sur l'extérieur, caractérisée en ce que ledit volume intérieur est obturé complètement au moyen de polystyrène expansé.

### Description détaillée de l'invention

Le principe consiste à obturer par remplissage avant usinage, les canaux ou les conduits par une matière qui pourra être enlevée facilement après usinage.

La matière utilisée présente les caractéristiques suivantes :
- mise en oeuvre simple et rapide ;
- pas de perturbation de l'usinage: pas de dissolution en présence du fluide d'usinage, bonne résistance mécanique à la pénétration des copeaux d'usinage, notamment lorsque ceux-ci sont très chauds et une bonne résistance aux efforts de coupe ;
- enlèvement aisé, rapide et total de cette matière après usage, sans laisser de traces dans le canal ou le conduit, ni sur le corps de pompe, ce qui évite ultérieurement tout risque d'apparition de problèmes lors de l'utilisation du corps de pompe sur des moteurs d'avions par exemple.

Un exemple d'une telle matière est le polystyrène. On peut ainsi utiliser des microbilles de polystyrène contenant une certaine quantité de gaz, par exemple 6,5% de pentane, et qui ont la capacité de s'expanser de 4 à 5 fois leur volume initial lorsqu'elles sont plongées dans de l'eau chaude à 95-100 °C.

La méthode peut être appliquée à une pièce à usiner du type de celles utilisées en plomberie, comprenant des tuyaux, des coudes et des raccords, et munie d'au moins deux extrémités débouchant sur l'extérieur. C'est le premier exemple de réalisation du procédé selon l'invention.

Des essais préliminaires réalisés sur cette pièce permettent dans un premier temps de déterminer qu'il faut, pour obtenir un produit moussé (polystyrène expansé) qui ne soit pas trop friable mais suffisamment dur pour résister aux conditions d'usinage, introduire une quantité qui correspond à un pourcentage optimum de la quantité totale de microbilles non expansées pouvant entrer dans ladite cavité.

On estime que cette quantité optimale est comprise entre 70 et 80% en poids de la quantité totale de microbilles non expansées pouvant entrer dans ladite cavité.

En pratique, l'obturation par remplissage de la pièce avant son usinage comprend les étapes suivantes :
- on détermine d'abord la quantité totale de microbilles non expansées pouvant entrer dans ladite cavité, par exemple par pesée différentielle;
- on introduit 75 à 80% (en poids) de cette quantité totale par une des extrémités, dite extrémité d'entrée, de la pièce à usiner, l' (les) autre(s) extrémité(s) ayant été obturée(s), éventuellement à l'aide d'un bouchon;
- on ferme ensuite la pièce à l'aide d'un bouchon placé au niveau de l'extrémité d'entrée;
- on chauffe ensuite la pièce, par exemple en la plongeant dans de l'eau bouillante pendant 15 à 20 minutes, de manière à provoquer l'expansion du polystyrène. La durée de chauffage doit être suffisante pour permettre au polystyrène de remplir tout le volume intérieur de la pièce.

Il a été constaté après refroidissement de la pièce que les billes de polystyrène forment au niveau du volume intérieur une masse homogène et compacte dans laquelle les billes sont soudées. Cette masse est capable de résister à l'action d'un jet d'air comprimé d'une pression de 8 Bars, soit de l'ordre de 8.10⁵ Pa. En outre, elle résiste bien aux émulsions de coupe et peut être usinée sans difficulté.

Après usinage, afin d'éliminer le polystyrène expansé, on plonge et on rince plusieurs fois la pièce refroidie dans un solvant approprié tel que par exemple du chlorure de méthylène. Au moins le dernier rinçage est effectué dans un solvant propre, afin de permettre le contrôle par spectrométrie infrarouge de l'absence de polystyrène résiduel. Il est cependant très avantageux d'utiliser un solvant propre pour chaque rinçage afin de ne pas contaminer la pièce, le solvant utilisé pouvant être recyclé dans un appareil prévu à cet effet (par évaporation et condensation) et servir pour le nettoyage d'une autre pièce.

Le procédé selon l'invention peut également s'appliquer à la protection de canaux internes dans un groupe de lubrification.

Un autre exemple de réalisation est la protection d'un corps de pompe hydraulique comprenant un canal central avec quatre ouvertures ou orifices dont trois constituent les orifices inférieurs, le dernier constituant l'orifice central supérieur.

Dans ce cas, on obture les trois orifices inférieurs au moyen de bouchons en polyuréthane. Ensuite, on introduit à l'intérieur du canal central de la pièce, par l'orifice central supérieur, des microbilles de polystyrène non expansé correspondant à 75 à 80% en poids de la quantité totale de polystyrène non expansé pouvant être introduite dans le canal central du corps de pompe à remplir. L'orifice central supérieur du corps de pompe est ensuite lui aussi obturé à l'aide d'un bouchon en polyuréthane. Le corps de pompe est alors placé dans un récipient d'eau bouillante. Dans la mesure où la pièce est froide, il faut attendre que l'eau soit à nouveau à ébullition. A partir du moment où l'eau bout, il faut compter 15 à 20 minutes pour que la température devienne homogène à l'intérieur de la pièce. Une fois le volume intérieur de la pièce rempli de polystyrène expansé, on retire la pièce de l'eau bouillante et on la refroidit jusqu'à la température ambiante. La pièce ainsi obtenue peut être utilisée tout de suite ou être stockée pendant plusieurs jours, voire même plusieurs mois. Quand on le souhaite, on retire les bouchons et la pièce est prête pour les opérations d'usinage.

Après usinage, la pièce doit être nettoyée par dissolution du polystyrène expansé. Le nettoyage comprend 4 étapes :
- 1^{ère} étape : la pièce est plongée entièrement dans un récipient rempli d'un solvant tel que le chlorure de méthylène pendant au minimum 2-3 heures afin de rendre libre le canal central. Pour accélérer le processus, il est recommandé de retirer à plusieurs reprises la pièce du récipient contenant le solvant, de l'égoutter, de la retourner et de la replonger dans le récipient. A l'issue de cette étape, la pièce est retirée du récipient puis égouttée, le solvant étant récupéré en vue d'être recyclé.
- 2^{ème} étape : on procède à un nouveau rinçage complet de la pièce en l'immergeant dans un autre récipient contenant du solvant propre. La pièce est ensuite égouttée, l'extérieur de la pièce étant à ce stade nettoyé.
- 3^{ème} étape : on s'assure par cette étape qu'il ne reste plus de polystyrène expansé dans la pièce. Pour cela, on bouche à nouveau les 3 orifices inférieurs du corps de pompe. L'orifice central supérieur sert dans un premier temps à introduire du solvant propre dans le canal central et est à son tour obturé. On retourne alors la pièce dans tous les sens de manière à faire circuler le solvant à l'intérieur du canal central. Après un certain temps, on débouche les orifices de la pièce et on récupère le solvant dans un récipient et on évapore le solvant. On examine ensuite le fond du récipient : s'il reste du polystyrène expansé, il sera présent sous forme d'une fine pellicule dans le fond du récipient et on devra recommencer l'opération de rinçage jusqu'à ne plus rien voir dans le fond du récipient.
- 4^{ème} étape : c'est l'étape ultime de vérification. On vérifie par spectroscopie infrarouge sur un échantillon extrait du fond du récipient qu'il ne reste pas dans la pièce des traces de polystyrène expansé.

Le fait d'utiliser du polystyrène expansé présente les avantages suivants :
- le polystyrène n'affecte en rien les conditions de coupe de l'outil utilisé, même lorsque celui-ci est précisément en prise avec le polystyrène ;
- l'utilisation du polystyrène permet d'assurer une bonne qualité d'usinage ;
- le polystyrène n'est pas affecté par l'usinage (résistant à l'influence de la chaleur, au fluide de coupe et à l'effort de coupe) ;
- le polystyrène peut être éliminé aisément dans sa totalité, au moyen d'un solvant, sans laisser de trace résiduelle dans les canaux ;
- l'utilisation du polystyrène permet de garantir, par contrôle spectrométrique du solvant, la propreté totale de la cavité ouverte.

## Revendications

1. Procédé de protection d'une pièce à usiner, présentant au moins une cavité interne ouverte, en particulier sous la forme d'un canal ou d'un conduit, munie d'au moins une extrémité donnant sur l'extérieur, contre la pénétration de copeaux ou résidus d'usinage à l'intérieur de ladite cavité ouverte, comprenant les étapes suivantes :
- obturation de toutes les extrémités de ladite cavité ouverte sauf une, dite extrémité d'entrée ;
- introduction d'une matière à fort pouvoir d'expansion à l'intérieur de ladite cavité ouverte par l'intermédiaire de l'extrémité d'entrée et obturation de cette extrémité;
- chauffage de la pièce de manière à provoquer l'expansion de ladite matière à l'intérieur de ladite cavité ouverte, jusqu'à ce que ladite matière occupe tout le volume de ladite cavité ouverte;
- élimination, après usinage de la pièce, de ladite matière de l'intérieur de ladite cavité ouverte par rinçages successifs dans un solvant adéquat.

2. Procédé selon la revendication 1, **caractérisé en ce que** ladite matière à fort pouvoir d'expansion est résistante à l'influence de la chaleur, au fluide de coupe et aux efforts de coupe.

3. Procédé selon la revendication 2, **caractérisé en ce que** ladite matière est du polystyrène.

4. Procédé selon la revendication 3, **caractérisé en ce que** la matière se présente sous la forme de billes contenant 90 à 95% de polystyrène.

5. Procédé selon la revendication 4, **caractérisé en ce que** l'on remplit ladite cavité à concurrence de 70 à 80% en poids de la quantité totale de billes pouvant entrer dans ladite cavité.

6. Procédé selon l'une quelconque des revendications précédentes, **caractérisé en ce que** ladite pièce est préalablement refroidie avant l'élimination de ladite matière à fort pouvoir d'expansion de ladite cavité ouverte.

7. Procédé selon l'une quelconque des revendications précédentes, **caractérisé en ce qu'**au moins le dernier rinçage est effectué au moyen d'une solution propre dudit solvant.

8. Procédé selon la revendication 7, **caractérisé en ce qu'**une étape de vérification de la présence de traces résiduelles de ladite matière à fort pouvoir d'expansion dans ladite cavité ouverte est ensuite effectuée par spectrométrie de la solution de solvant ayant servi au dernier rinçage.

9. Procédé de protection d'une pièce à usiner de géométrie complexe, présentant au moins une cavité interne ouverte, en particulier sous la forme d'un canal ou d'un conduit, munie d'au moins une extrémité donnant sur l'extérieur, contre la pénétration de copeaux ou résidus d'usinage à l'intérieur de ladite cavité ouverte, **caractérisé en ce que** le volume de la cavité est totalement rempli par une matière solide, et de préférence du polystyrène expansé.

10. Pièce à usiner de géométrie complexe, présentant au moins une cavité interne ouverte présentant un volume intérieur, en particulier sous la forme d'un canal ou d'un conduit, munie d'au moins une extrémité donnant sur l'extérieur, **caractérisée en ce que** ledit volume intérieur est rempli complètement au moyen de polystyrène expansé.
